# FASCICULE DE BREVET EUROPEEN

(11) **EP 3 666 665 B1**
(45) Date de publication et mention de la délivrance du brevet: **19.05.2021**
(21) Numéro de dépôt: 19215731.1
(22) Date de dépôt: 12.12.2019
(51) Int. Cl.: B64G 1/22

(54) **DISPOSITIF DEPLOYABLE AVEC CONTROLE DE LONGUEUR DEPLOYEE D'UNE STRUCTURE DEPLOYABLE**
AUSFAHRBARE VORRICHTUNG MIT KONTROLLE DER AUSGEFAHRENEN LÄNGE EINER AUSFAHRBAREN STRUKTUR
DEPLOYABLE DEVICE WITH CONTROL OF DEPLOYED LENGTH OF A DEPLOYABLE STRUCTURE

(30) Priorité: 13.12.2018 FR 1872825
(43) Date de publication de la demande: 17.06.2020
(73) Titulaire: Thales, 92400 Courbevoie (FR)
(72) Inventeur: CHASSOULIER, Damien, 06156 Cannes La Bocca Cedex (FR); BOUCHET, Valentin, 06156 Cannes La Bocca Cedex (FR); BAUDASSÉ, Yannick, 06156 Cannes La Bocca Cedex (FR); PIGERON, Morgan, 06156 Cannes La Bocca Cedex (FR)
(74) Mandataire: Marks & Clerk France

(56) Documents cités:
- EP-A1- 0 858 946
- WO-A1-90/12736
- US-A1- 2006 272 265

## Description

La présente invention concerne un dispositif déployable, par exemple à mètre-rubans. Elle s'applique notamment au domaine des équipements spatiaux qui doivent être déployés en orbite et plus particulièrement aux équipements spatiaux pour satellites, tels que des antennes, des générateurs solaires, des instruments. Toutefois, l'invention s'applique à tout autre domaine dans lequel il est souhaitable de contrôler la longueur déployée d'une structure déployable.

Dans cette demande de brevet, nous parlerons de mètre-rubans comme exemple de structure déployable. Cet exemple est non limitatif puisque l'invention s'applique à tout type de structure déployable. Il peut par exemple s'agir aussi de rubans plats. Dans le domaine spatial, les mètre-rubans sont fréquemment utilisés dans le déploiement. En position stockée (ou enroulée), les mètre-rubans sont enroulés autour d'un mandrin. Le déploiement des mètre-rubans est assuré de manière autonome par leur déroulement spontané lorsque le mandrin est libre en rotation. Les mètre-rubans sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée. Les mètre-rubans monostables ont donc une tendance naturelle à se déployer pour se retrouver dans leur état déroulé. Le déploiement des rubans monostables est souvent anarchique et incontrôlé. Les rubans bistables possèdent deux positions naturelles (position enroulée et position déployée) et ne nécessitent pas de maintien en position enroulée lorsque la section est totalement aplatie. Leur déploiement est linéaire et contrôlé.

Lors des déploiements et reploiements de la structure déployable (par exemple un mètre-ruban), il est parfois nécessaire de connaître la position exacte de la structure déployable, même suite à une panne électrique.

Il existe des solutions dans le domaine des structures déployables de type mètre-ruban dans lesquelles des composants mécano-électriques sont utilisés pour satisfaire cette fonction de contrôle de la longueur déployée (voir par exemple le document US 2006/272265 A1). Il est par exemple connu d'utiliser un potentiomètre à balais avec réducteur. Cette solution présente l'inconvénient que les éléments utilisés sont sensibles à l'usure des pistes avec création de poussières pouvant créer des parasites sur le signal. En outre, il est nécessaire d'avoir recours à des éléments de structure additionnels et un réducteur, et la mesure obtenue est celle à la sortie du mandrin mais pas de la sortie du mètre-ruban.

Une autre solution connue consiste à mettre en œuvre des capteurs mécaniques, mais demeure délicate sur un déploiement de grande longueur. Par ailleurs, les capteurs ne sont pas toujours adaptables aux différentes configurations de structure déployable.

L'invention vise à pallier tout ou partie des problèmes cités plus haut en proposant un dispositif déployable présentant l'avantage d'être peu encombrant, simple à réaliser, présentant une optimisation du volume et de la masse de l'ensemble, permettant un fonctionnement sur de grandes longueurs de déploiement, sans aucun contact, et s'adaptant aux différentes configurations de structures déployables. De plus, l'invention est fiable et a peu d'impact sur la structure existante.

A cet effet, l'invention a pour objet un dispositif déployable comprenant une structure porteuse, une structure déployable apte à passer d'une configuration enroulée autour d'un premier axe Z à une configuration déployée selon un deuxième axe X sensiblement perpendiculaire au premier axe Z, en se déployant d'une longueur définie dans un référentiel de la structure porteuse, caractérisé en ce qu'il comprend en outre un dispositif de contrôle de longueur déployée comprenant un capteur et un calculateur relié au capteur, une première piste conductrice électriquement reliée au capteur s'étendant sur la structure déployable, sensiblement le long du pourtour de la structure déployable, et formant une ou des spires d'une première bobine dans la configuration enroulée, et en ce que le capteur est configuré pour mesurer un paramètre électrique issu de la première piste conductrice électriquement qui varie avec la longueur déployée de la structure déployable et le calculateur est configuré pour déterminer la longueur déployée de la structure déployable.

Selon un mode de réalisation de l'invention, une extrémité non enroulée de la structure déployable est encastrée dans la structure porteuse.

Avantageusement, le calculateur et le capteur sont positionnés sur la structure porteuse.

Selon un autre mode de réalisation, le capteur comprend au moins une deuxième bobine à proximité de la première bobine positionnée sur la structure porteuse, et le capteur est relié électriquement à la première piste conductrice par inductance mutuelle entre la première bobine et la au moins une deuxième bobine.

Avantageusement, le dispositif déployable selon l'invention comprend au moins une deuxième piste conductrice électriquement reliée au capteur s'étendant sur la structure déployable, sensiblement le long du pourtour de la structure déployable, et formant une ou des spires d'une troisième bobine dans la configuration enroulée, et en ce que chacune de la première et deuxième pistes conductrices s'étend sur une portion de largeur de la structure déployable.

Avantageusement, la structure déployable est un mètre-ruban.

L'invention concerne aussi un satellite comprenant au moins un dispositif déployable selon l'invention.

L'invention concerne également un procédé de contrôle de longueur déployée d'une structure déployable apte à passer d'une configuration enroulée autour d'un premier axe Z à une configuration déployée selon un deuxième axe X sensiblement perpendiculaire au premier axe Z en se déployant d'une longueur définie d'un dispositif déployable comprenant un dispositif de contrôle de longueur déployée comprenant un capteur et un calculateur relié au capteur, une première piste conductrice électriquement reliée au capteur s'étendant sur la structure déployable, sensiblement le long du pourtour de la structure déployable, et formant une ou des spires d'une première bobine dans la configuration enroulée, le procédé comprenant :
- une première étape de mesure par le capteur d'un paramètre électrique issu de la première piste conductrice électriquement qui varie avec la longueur déployée de la structure déployable,
- une deuxième étape de détermination par le calculateur de la longueur déployée de la structure déployable.

Avantageusement, la structure déployable est un mètre-ruban.

Avantageusement, le procédé selon l'invention comprend au préalable une unique étape de caractérisation de la longueur déployée de la structure déployable en fonction du paramètre électrique mesuré.

Avantageusement, la première étape de mesure comprend les étapes suivantes :
- une étape de résonnance de la première bobine par le calculateur (9) à une fréquence dont la valeur dépend de la longueur déployée de la structure déployable,
- une étape de mesure par le capteur de la fréquence de résonnance de la première bobine.

L'invention sera mieux comprise et d'autres avantages apparaîtront à la lecture de la description détaillée d'un mode de réalisation donné à titre d'exemple, description illustrée par le dessin joint dans lequel :
[Fig.1] La figure 1 représente schématiquement un dispositif déployable avec dispositif de contrôle de la longueur déployée selon l'invention ;
[Fig.2] La figure 2 représente schématiquement une variante d'un dispositif déployable avec dispositif de contrôle de la longueur déployée selon l'invention ;
[Fig.3] La figure 3 représente schématiquement un autre mode de réalisation d'un dispositif déployable avec dispositif de contrôle de la longueur déployée selon l'invention ;
[Fig.4] La figure 4 représente schématiquement un autre mode de réalisation d'un dispositif déployable avec dispositif de contrôle de la longueur déployée selon l'invention ;
[Fig.5] La figure 5 représente schématiquement un satellite équipé d'un dispositif déployable selon l'invention ;
[Fig.6] La figure 6 illustre schématiquement les étapes d'un procédé de contrôle de la longueur déployée selon l'invention.

Par souci de clarté, les mêmes éléments porteront les mêmes repères dans les différentes figures.

L'invention s'applique à tout type de structure déployable, par exemple des rubans plats, des mètre-rubans monostables ou bistables. La mise en œuvre de mètre-rubans monostables demande un effort de guidage plus important. Les mètre-rubans bistables sont préférés pour l'homogénéité de leur déploiement. De plus, en configuration enroulée, ils restent enroulés et en configuration déployée, ils restent déployés.

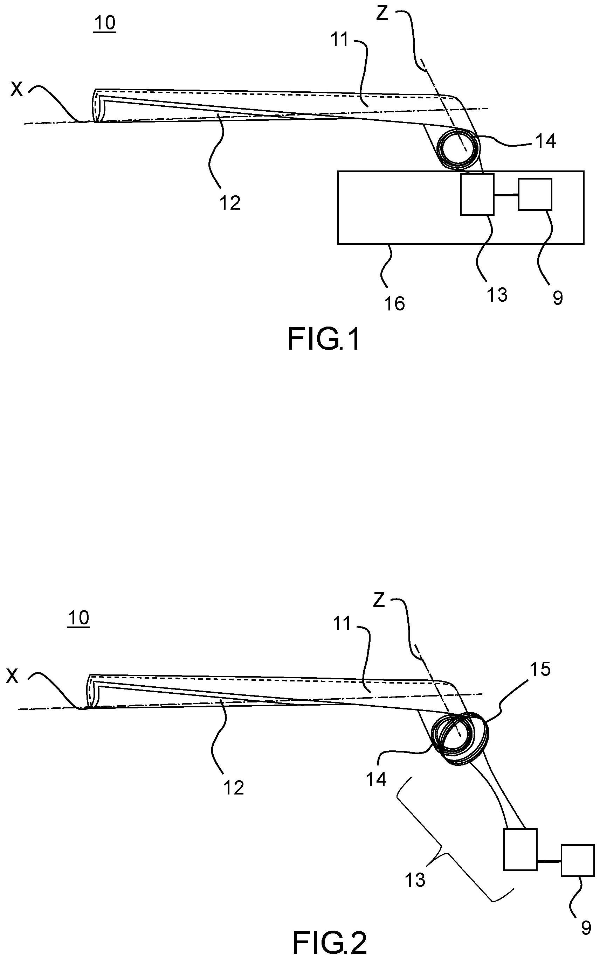

La figure 1 représente schématiquement un dispositif déployable 10 avec dispositif de contrôle de la longueur déployée selon l'invention. Le dispositif déployable 10 comprend une structure porteuse 16, par exemple la caisse d'un satellite, et une structure déployable 11, par exemple un mètre-ruban, apte à passer d'une configuration enroulée autour d'un premier axe Z à une configuration déployée selon un deuxième axe X sensiblement perpendiculaire au premier axe Z, en se déployant d'une longueur définie dans un référentiel de la structure porteuse 16. En d'autres termes, la structure déployable est positionnée sur la structure porteuse 16 en position enroulée et s'étend depuis la structure porteuse 16 selon un axe X. Entre les deux configurations enroulée et déployée, la structure déployable peut se trouver dans une multitude de configurations intermédiaires où elle est déployée, pour chacune de ces configurations, d'une certaine longueur que l'on cherche à déterminer.

Selon l'invention, le dispositif déployable 10 comprend en outre un dispositif de contrôle de longueur déployée comprenant un capteur 13 et un calculateur 9 relié au capteur 13 et une première piste conductrice 12 électriquement reliée au capteur 13 s'étendant sur la structure déployable 11, sensiblement le long du pourtour de la structure déployable 11, et formant une ou des spires d'une première bobine 14 dans la configuration enroulée. Et le capteur 13 est configuré pour mesurer un paramètre électrique issu de la première piste conductrice 12 électriquement qui varie avec la longueur déployée de la structure déployable 11 (et la forme de la structure déployable) et le calculateur 9 est configuré pour déterminer la longueur déployée de la structure déployable 11. En d'autres termes, l'invention repose sur la mesure de l'inductance (ou d'une grandeur qui varie avec l'inductance) induite par la forme de la piste conductrice 12 enroulée sur elle-même et/ou plus ou moins déployée selon la configuration d'utilisation. Tout courant d'intensité i qui circule génère un champ magnétique à travers la section qu'il entoure, c'est le flux magnétique. L'inductance est le rapport entre le flux magnétique ainsi obtenu et l'intensité i du courant.

Plusieurs modes de réalisation sont envisageables. Le calculateur 9 peut être configuré pour faire résonner la première bobine 14 à l'aide d'un oscillateur puis le capteur 13 peut mesurer la fréquence de résonance de la bobine. La forme de la bobine 14 (c'est-à-dire le nombre de spires qu'elle forme selon la configuration dans laquelle elle se trouve, i.e. complètement enroulée, partiellement enroulée ou complètement déployée) a un impact sur la valeur de la fréquence de résonance.

Il est possible que le calculateur 9 soit configuré pour injecter un créneau de tension aux bornes de la piste conductrice. Le système oscille alors sur quelques périodes, et le capteur 13 mesure la fréquence.

De même, le calculateur 9 peut être configuré pour injecter une tension sinusoïdale, par exemple de fréquence et d'amplitude constante, aux bornes de la piste conductrice et mesurer l'amplitude du courant et le déphasage qui en résulte entre la tension et le courant.

Lorsque la structure déployable 11 se déploie, l'amplitude et la phase (par rapport à la tension) du courant change. L'amplitude et la phase du courant représentent une image de la longueur déployée. On peut noter que le même principe s'applique en remplaçant la tension par un courant et le courant par une tension.

La mesure d'une grandeur électrique (fréquence, déphasage et/ou amplitude) qui varie avec la longueur déployée et la forme de la structure déployable permet de déterminer la longueur déployée de la structure déployable, de manière fiable et avec une électronique d'acquisition simple.

La correspondance entre la grandeur électrique et la longueur déployée peut être établie au moyen de calculs ou bien grâce à une étape préalable de caractérisation réalisée au sol, comme expliqué plus loin.

La piste conductrice électriquement 12 peut être un élément cuivré de type PCB flexible, permettant de réduire au maximum l'épaisseur totale de la structure déployable avec piste. Il peut aussi s'agir d'un fil gainé classique dans la résine du mètre-ruban ou collé dessus, d'un fil de bobinage émaillé (cuivre et émail) de quelques micromètres d'épaisseur et qui résiste à hautes températures de l'ordre de 200°C sans requérir une épaisseur importante d'isolant. Dans ce mode de réalisation, la piste conductrice 12 est le capteur 13. Autrement dit, c'est la piste 12 qui capte le signal.

Avantageusement, et comme représenté sur la figure 1, le calculateur 9 et le capteur 13 sont positionnés sur la structure porteuse 16.

Dans le mode de réalisation représenté schématiquement sur la figure 1, la structure déployable a une extrémité libre. Ce mode de réalisation est aussi appelé « mât en aller simple ».

Dans le mode de réalisation représenté schématiquement sur la figure 1, le capteur 13 est relié à la piste conductrice 12 au niveau de la première bobine 14. Dans cette configuration, il faut gérer l'enroulement des fils reliant la première bobine 14 au capteur 13. Cette solution est envisageable pour un faible enroulement de quelques tours, ne nécessitant qu'une faible longueur de fils. Pour des enroulements plus importants, il existe d'autres solutions possibles et compatibles avec l'invention, afin de ne pas limiter le nombre de tours, par exemple en utilisant un appareil de transfert tel qu'un collecteur tournant, un collecteur à rouleaux (aussi connue sous le nom anglo-saxon roll ring) ou un transformateur tournant.

La figure 2 représente schématiquement une variante d'un dispositif déployable 10 avec dispositif de contrôle de la longueur déployée selon l'invention. Dans cette variante, le capteur 13 comprend au moins une deuxième bobine 15 à proximité de la première bobine 14 positionnée sur la structure porteuse 16, et le capteur 13 est relié électriquement à la première piste conductrice 12 par inductance mutuelle entre la première bobine 14 et la au moins une deuxième bobine 15. La première bobine 14 est fermée sur elle-même, de préférence en court-circuit, mais peut avoir un circuit interne d'adaptation d'impédance (résistance, inductance et capacité). Ainsi, la structure déployable 11 est libre de se déployer et/ou de s'enrouler, sans contrainte d'enroulement des fils reliés au capteur 13. En présence de deux bobines 14, 15 à proximité l'une de l'autre, l'une des bobines influence l'autre. Ainsi, l'inductance mutuelle varie avec l'inductance de chaque bobine 14, 15, en fonction des caractéristiques (c'est-à-dire nombre de spires de la bobine 14) de chaque bobine.

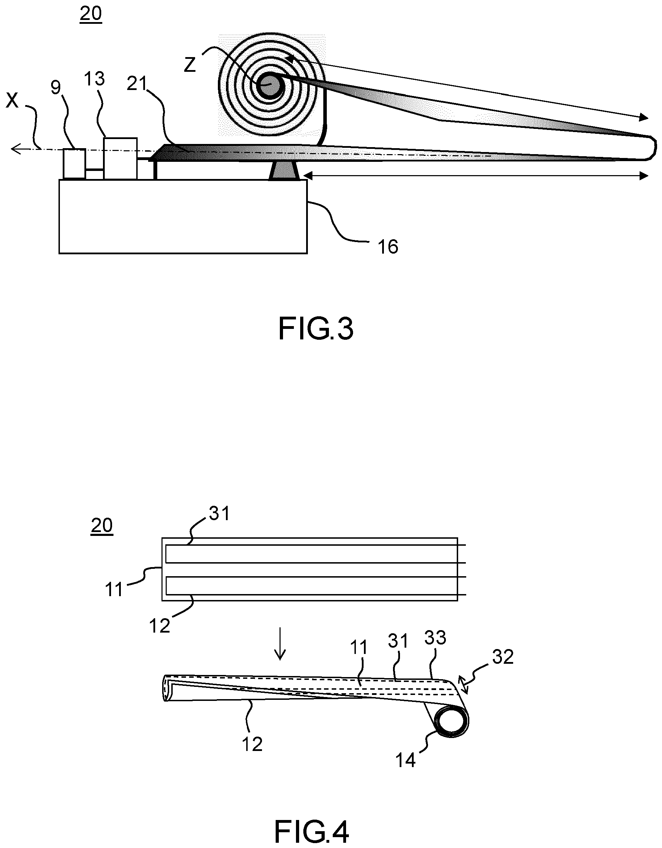

La figure 3 représente schématiquement un autre mode de réalisation d'un dispositif déployable 20 avec dispositif de contrôle de la longueur déployée selon l'invention. Dans ce mode de réalisation, une extrémité 21 non enroulée de la structure déployable 11 est encastrée dans la structure porteuse 16. Ce mode de réalisation est aussi appelé « mât en opposition ».

Dans ce mode de réalisation, le capteur peut donc aisément être positionné sur la structure porteuse 16, sans contrainte d'enroulement de fils puisque l'extrémité 21 est encastrée dans la structure porteuse. Toutefois, il est également envisageable de combiner la configuration « mât en opposition » avec une deuxième bobine 15, pour utiliser l'inductance mutuelle comme expliqué précédemment.

La figure 4 représente schématiquement un autre mode de réalisation d'un dispositif déployable 30 avec dispositif de contrôle de la longueur déployée selon l'invention. Dans ce mode de réalisation, le dispositif déployable 30 comprend au moins une deuxième piste conductrice 31 électriquement reliée au capteur 13 s'étendant sur la structure déployable 11, sensiblement le long du pourtour de la structure déployable 11, et formant une ou des spires d'une troisième bobine 33 dans la configuration enroulée, et chacune de la première et deuxième pistes conductrices 12, 31 s'étend sur une portion de largeur 32 de la structure déployable 11. Chaque piste est idéalement située près du bord de la structure déployable, mais peut également être moins près du bord. Il est préférable que chaque piste ne s'entrecroise pas. Autrement dit, chaque piste s'étend longitudinalement sans se croiser et sans croiser une autre piste. En haut de la figure 4 est représentée une vue de dessus de la structure déployable 11 sur laquelle le positionnement des deux pistes 12 et 31 est visible. Ce mode de réalisation permet la redondance de piste conductrice en cas de panne de l'une des deux pistes.

Avantageusement, les deux pistes 12, 31 sont espacées l'une de l'autre, de sorte à réduire l'influence (la mutuelle inductance) de l'une sur l'autre. Autrement dit, les deux pistes 12, 31 cheminent côte-à-côte avec une distance entre les deux pistes. Du fait de la distance, il en résulte une inductance de chaque bobine ainsi obtenue diminuée et donc une perte en gain, mais cela permet en même temps de réduire l'influence entre la piste dite nominale et la piste dite redondante sans perdre complètement en gain sur chacune des voies.

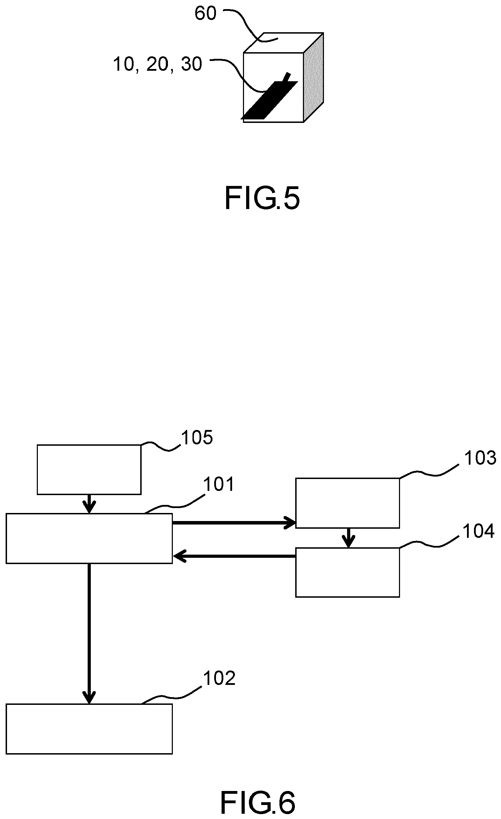

La figure 5 représente schématiquement un satellite 60 équipé d'un dispositif déployable selon l'invention.

La figure 6 illustre schématiquement les étapes d'un procédé de contrôle de la longueur déployée selon l'invention. Le procédé de contrôle de longueur déployée d'une structure déployable 11 apte à passer d'une configuration enroulée autour d'un premier axe Z à une configuration déployée selon un deuxième axe X sensiblement perpendiculaire au premier axe Z en se déployant d'une longueur définie d'un dispositif déployable 10 comprenant un dispositif de contrôle de longueur déployée comprenant un capteur 13 et un calculateur 9 relié au capteur 13 et une première piste conductrice 12 électriquement reliée au capteur 13, physiquement ou par mutuelle inductance, s'étendant sur la structure déployable 11, sensiblement le long du pourtour de la structure déployable 11, et formant une ou des spires d'une première bobine 14 dans la configuration enroulée, comprend une première étape 101 de mesure par le capteur 13 d'un paramètre électrique issu de la première piste conductrice 12 électriquement qui varie avec la longueur déployée de la structure déployable 11, et une deuxième étape 102 de détermination par le calculateur 9 de la longueur déployée de la structure déployable 11.

Avantageusement, le procédé selon l'invention comprend au préalable une unique étape 105 de caractérisation de la longueur déployée de la structure déployable 11 en fonction du paramètre électrique mesuré. Généralement, cette étape 105 est réalisée au moyen d'une modélisation de l'ensemble du dispositif, et pour différentes longueurs déployées, on regarde le paramètre électrique correspondant. Alternativement, l'étape 105 peut être réalisée par une mesure dans une salle blanche mais la taille de la salle peut être un facteur limitant qui oblige à effectuer les mesures jusqu'à une certaine distance et à extrapoler au-delà de la limite imposée par la salle. L'étape 105 de caractérisation peut n'être réalisée qu'une unique fois et permet d'avoir une correspondance entre le paramètre électrique et la longueur déployée.

Selon un mode de réalisation du procédé selon l'invention, la première étape 101 de mesure peut comprendre une étape 103 de résonnance de la première bobine 14 par le calculateur 9 à une fréquence dont la valeur dépend de la longueur déployée de la structure déployable 11, et une étape 104 de mesure par le capteur 13 de la fréquence de résonnance de la première bobine 14.

## Revendications

1. Dispositif déployable (10, 20, 30) comprenant :
- une structure porteuse (16),
- une structure déployable (11) apte à passer d'une configuration enroulée autour d'un premier axe (Z) à une configuration déployée selon un deuxième axe (X) sensiblement perpendiculaire au premier axe (Z), en se déployant d'une longueur définie dans un référentiel de la structure porteuse (16),
- un dispositif de contrôle de longueur déployée, **caractérisé en ce que** ledit dispositif de contrôle de longueur déployée comprend :
- un capteur (13) et un calculateur (9) relié au capteur (13),
- une première piste conductrice (12) électriquement reliée au capteur (13) s'étendant sur la structure déployable (11), sensiblement le long du pourtour de la structure déployable (11), et formant une ou des spires d'une première bobine (14) dans la configuration enroulée,
et **en ce que** le capteur (13) est configuré pour mesurer un paramètre électrique issu de la première piste conductrice (12) électriquement qui varie avec la longueur déployée de la structure déployable (11) et le calculateur (9) est configuré pour déterminer la longueur déployée de la structure déployable (11).

2. Dispositif déployable (20) selon la revendication 1, **caractérisé en ce qu'**une extrémité (21) non enroulée de la structure déployable (11) est encastrée dans la structure porteuse (16).

3. Dispositif déployable (20) selon l'une quelconque des revendications 1 ou 2, **caractérisé en ce que** le calculateur (9) et le capteur (13) sont positionnés sur la structure porteuse (16).

4. Dispositif (10, 30) déployable selon l'une quelconque des revendications précédentes, **caractérisé en ce que** le capteur (13) comprend au moins une deuxième bobine (15) à proximité de la première bobine (14) positionnée sur la structure porteuse (16), et **en ce que** le capteur (13) est relié électriquement à la première piste conductrice (12) par inductance mutuelle entre la première bobine (14) et la au moins une deuxième bobine (15).

5. Dispositif déployable (30) selon la revendication 4, **caractérisé en ce qu'**il comprend au moins une deuxième piste conductrice (31) électriquement reliée au capteur (13) s'étendant sur la structure déployable (11), sensiblement le long du pourtour de la structure déployable (11), et formant une ou des spires d'une troisième bobine (33) dans la configuration enroulée, et **en ce que** chacune de la première et deuxième pistes conductrices (12, 31) s'étend sur une portion de largeur (32) de la structure déployable (11).

6. Dispositif déployable (10, 20, 30) selon l'une quelconque des revendications précédentes, **caractérisé en ce que** la structure déployable (11) est un mètre-ruban.

7. Satellite (60) **caractérisé en ce qu'**il comprend au moins un dispositif déployable (10, 20, 30) selon l'une des revendications précédentes.

8. Procédé de contrôle de longueur déployée d'une structure déployable (11) apte à passer d'une configuration enroulée autour d'un premier axe (Z) à une configuration déployée selon un deuxième axe (X) sensiblement perpendiculaire au premier axe (Z) en se déployant d'une longueur définie dans un référentiel d'une structure porteuse (16) d'un dispositif déployable (10, 20, 30) comprenant un dispositif de contrôle de longueur déployée comprenant :
- un capteur (13) et un calculateur (9) relié au capteur (13),
- une première piste conductrice (12) électriquement reliée au capteur (13) s'étendant sur la structure déployable (11), sensiblement le long du pourtour de la structure déployable (11), et formant une ou des spires d'une première bobine (14) dans la configuration enroulée,
**caractérisé en ce que** le procédé comprend :
- une première étape (101) de mesure par le capteur (13) d'un paramètre électrique issu de la première piste conductrice (12) électriquement qui varie avec la longueur déployée de la structure déployable (11),
- une deuxième étape (102) de détermination par le calculateur (9) de la longueur déployée de la structure déployable (11).

9. Procédé de contrôle selon la revendication 8, **caractérisé en ce qu'**il comprend au préalable une unique étape (105) de caractérisation de la longueur déployée de la structure déployable (11) en fonction du paramètre électrique mesuré.

10. Procédé de contrôle selon l'une des revendications 8 ou 9, **caractérisé en ce que** la première étape (101) de mesure comprend les étapes suivantes :
- une étape (103) de résonnance de la première bobine (14) par le calculateur (9) à une fréquence dont la valeur dépend de la longueur déployée de la structure déployable (11),
- une étape (104) de mesure par le capteur (13) de la fréquence de résonnance de la première bobine (14).

## Patentansprüche

1. Ausfahrbare Vorrichtung (10, 20, 30), Folgendes umfassend:
- eine Trägerstruktur (16),
- eine ausfahrbare Struktur (11), welche in der Lage ist, von einer um eine erste Achse (Z) eingerollten Konfiguration zu einer entlang einer zweiten Achse (X), welche im Wesentlichen rechtwinklig zur ersten Achse (Z) ist, ausgefahrenen Konfiguration überzugehen, indem sie sich um eine bestimmte Länge in einem Koordinatensystem der Trägerstruktur (16) ausfährt,
- eine Vorrichtung zum Kontrollieren der ausgefahrenen Länge,
**dadurch gekennzeichnet, dass** die Vorrichtung zum Kontrollieren der ausgefahrenen Länge Folgendes umfasst:
- einen Sensor (13) und einen mit dem Sensor (13) verbundenen Rechner (9),
- eine erste leitfähige Spur (12), welche elektrisch mit dem Sensor (13) verbunden ist, welche sich über die ausfahrbare Struktur (11) im Wesentlichen entlang des Umfangs der ausfahrbaren Struktur (11) erstreckt, und eine oder mehrere Wicklungen einer ersten Spule (14) in der eingerollten Konfiguration bildet,
und dadurch, dass der Sensor (13) konfiguriert ist, um einen elektrischen Parameter zu messen, welcher aus der ersten elektrisch leitfähigen Spur (12) stammt, der entsprechend der ausgefahrenen Länge der ausfahrbaren Struktur (11) variiert und der Rechner (9) konfiguriert ist, um die ausgefahrene Länge der ausfahrbaren Struktur (11) zu bestimmen.

2. Ausfahrbare Vorrichtung (20) nach Anspruch 1, **dadurch gekennzeichnet, dass** ein nicht eingerolltes Ende (21) der ausfahrbaren Struktur (11) in der Trägerstruktur (16) eingelassen ist.

3. Ausfahrbare Vorrichtung (20) nach einem der Ansprüche 1 oder 2, **dadurch gekennzeichnet, dass** der Rechner (9) und der Sensor (13) auf der Trägerstruktur positioniert sind.

4. Ausfahrbare Vorrichtung (10, 30) nach einem der vorhergehenden Ansprüche, **dadurch gekennzeichnet, dass** der Sensor (13) mindestens eine zweite Spule (15) in der Nähe der ersten Spule (14) umfasst, welche auf der Trägerstruktur (16) positioniert ist, und dadurch, dass der Sensor (13) elektrisch mit der ersten leitfähigen Spur (12) durch gegenseitige Induktivität zwischen der ersten Spule (14) und der mindestens einen zweiten Spule (15) verbunden ist.

5. Ausfahrbare Vorrichtung (30) nach Anspruch 4, **dadurch gekennzeichnet, dass** sie mindestens eine zweite leitfähige Spur (31) umfasst, welche elektrisch mit dem Sensor (13) verbunden ist, welche sich an der ausfahrbaren Struktur (11) im Wesentlichen entlang des Umfangs der ausfahrbaren Struktur (11) erstreckt und eine oder mehrere Wicklungen einer dritten Spule (33) in der eingerollten Konfiguration bildet, und dadurch, dass jede der ersten und der zweiten leitfähigen Spur (12, 31) sich über einen Abschnitt der Breite (32) der ausfahrbaren Struktur (11) erstreckt.

6. Ausfahrbare Vorrichtung (10, 20, 30) nach einem der vorhergehenden Ansprüche, **dadurch gekennzeichnet, dass** die ausfahrbare Struktur (11) ein Maßband ist.

7. Satellit (60), **dadurch gekennzeichnet, dass** er mindestens eine ausfahrbare Struktur (10, 20, 30) nach einem der vorhergehenden Ansprüche umfasst.

8. Verfahren zum Kontrollieren der ausgefahrenen Länge einer ausgefahrenen Struktur (11), welche in der Lage ist, von einer um eine erste Achse (Z) eingerollten Konfiguration zu einer entlang einer zweiten Achse (X), welche im Wesentlichen rechtwinklig zur ersten Achse (Z) ist, ausgefahrenen Konfiguration überzugehen, indem sie sich um eine bestimmte Länge in einem Koordinatensystem einer Trägerstruktur (16) eine ausfahrbaren Struktur (10, 20, 30) ausfährt, umfassend eine Vorrichtung zum Kontrollieren der ausgefahrenen Länge, Folgendes umfassend:
- einen Sensor (13) und einen mit dem Sensor (13) verbundenen Rechner (9),
- eine erste leitfähige Spur (12), welche elektrisch mit dem Sensor (13) verbunden ist, welche sich über die ausfahrbare Struktur (11) im Wesentlichen entlang des Umfangs der ausfahrbaren Struktur (11) erstreckt, und eine oder mehrere Wicklungen einer ersten Spule (14) in der eingerollten Konfiguration bildet,
**dadurch gekennzeichnet, dass** das Verfahren Folgendes umfasst:
- einen ersten Schritt (101) des Messens, durch den Sensor (13), eines elektrischen Parameters, welcher aus der ersten elektrisch leitfähigen Spur (12) stammt, welcher entsprechend der ausgefahrenen Länge der ausfahrbaren Struktur (11) variiert,
- einen zweiten Schritt (102) des Bestimmens, durch den Rechner (9), der ausgefahrenen Länge der ausfahrbaren Struktur (11).

9. Verfahren zum Kontrollieren nach Anspruch 8, **dadurch gekennzeichnet, dass** es zuvor einen einzigen Schritt (105) des Charakterisierens der ausgefahrenen Länge der ausfahrbaren Struktur (11) angesichts des gemessenen elektrischen Parameters umfasst.

10. Verfahren zum Kontrollieren nach einem der Ansprüche 8 oder 9, **dadurch gekennzeichnet, dass** der erste Schritt (101) des Messens folgende Schritte umfasst:
- einen Schritt (103) des Resonierens der ersten Spule (14) durch den Rechner (9) bei einer Frequenz, deren Wert von der ausgefahrenen Länge der ausfahrbaren Struktur (11) abhängt,
- einen Schritt (104) des Messens, durch den Sensor (13), der Resonanzfrequenz der ersten Spule (14).

## Claims

1. Deployable device (10, 20, 30) comprising:
- a supporting structure (16),
- a deployable structure (11) capable of switching from a configuration wound around a first axis (Z) to a configuration deployed along a second axis (X) substantially perpendicular to the first axis (Z), by being deployed by a defined length in a frame of reference of the supporting structure (16),
- a deployed length controlling device,
**characterized in that** the deployed length controlling device comprises:
- a sensor (13) and a computer (9) linked to the sensor (13),
- a first conductive track (12) electrically linked to the sensor (13) extending on the deployable structure (11), substantially along the perimeter of the deployable structure (11), and forming one or more turns of a first coil (14) in the wound configuration,
and **in that** the sensor (13) is configured to measure an electrical parameter stemming from the first electrically conductive track (12) which varies with the deployed length of the deployable structure (11) and the computer (9) is configured to determine the deployed length of the deployable structure (11).

2. Deployable device (20) according to Claim 1, **characterized in that** an unwound end (21) of the deployable structure (11) is embedded in the supporting structure (16).

3. Deployable device (20) according to any of Claims 1 or 2, **characterized in that** the computer (9) and the sensor (13) are positioned on the supporting structure (16).

4. Deployable device (10, 30) according to any one of the preceding claims, **characterized in that** the sensor (13) comprises at least one second coil (15) in proximity to the first coil (14) positioned on the supporting structure (16), and **in that** the sensor (13) is linked electrically to the first conductive track (12) by mutual inductance between the first coil (14) and the at least one second coil (15).

5. Deployable device (30) according to Claim 4, **characterized in that** it comprises at least one second conductive track (31) electrically linked to the sensor (13) extending on the deployable structure (11), substantially along the perimeter of the deployable structure (11), and forming one or more turns of a third coil (33) in the wound configuration, and **in that** each of the first and second conductive tracks (12, 31) extends over a portion of width (32) of the deployable structure (11).

6. Deployable device (10, 20, 30) according to any one of the preceding claims, **characterized in that** the deployable structure (11) is a tape measure.

7. Satellite (60), **characterized in that** it comprises at least one deployable device (10, 20, 30) according to one of the preceding claims.

8. Method for controlling the deployed length of a deployable structure (11) capable of switching from a configuration wound around a first axis (Z) to a configuration deployed according to a second axis (X) substantially perpendicular to the first axis (Z) by being deployed by a defined length in a frame of reference of a supporting structure (16) of a deployable device (10, 20, 30) comprising a deployed length controlling device comprising:
- a sensor (13) and a computer (9) linked to the sensor (13),
- a first conductive track (12) electrically linked to the sensor (13) extending on the deployable structure (11), substantially along the perimeter of the deployable structure (11), and forming one or more turns of a first coil (14) in the wound configuration,
**characterized in that** the method comprises:
- a first step (101) of measuring, by the sensor (13), an electrical parameter stemming from the first electrically conductive track (12) which varies with the deployed length of the deployable structure (11),
- a second step (102) of determining, by the computer (9), the deployed length of the deployable structure (11).

9. Control method according to Claim 8, **characterized in that** it comprises, beforehand, a single step (105) of characterizing the deployed length of the deployable structure (11) as a function of the measured electrical parameter.

10. Control method according to one of Claims 8 or 9, **characterized in that** the first measuring step (101) comprises the following steps:
- a step (103) of resonating the first coil (14) by the computer (9) at a frequency whose value depends on the deployed length of the deployable structure (11),
- a step (104) of measuring, by the sensor (13), the resonance frequency of the first coil (14).
